# EUROPÄISCHE PATENTSCHRIFT

(11) **EP 0 465 723 B1**
(45) Veröffentlichungstag und Bekanntmachung des Hinweises auf die Patenterteilung: **15.03.1995**
(21) Anmeldenummer: 90124036.6
(22) Anmeldetag: 13.12.1990
(51) Int. Cl.: C07F 7/04

(54) **Verfahren zur Herstellung von Ditertiärbutoxydiacetoxysilan**
Process for the preparation of ditertiary butoxy-diacetoxysilane
Procédé pour la préparation de ditert-butoxy-diacétoxysilane

(30) Priorität: 09.07.1990 DE 4021870
(43) Veröffentlichungstag der Anmeldung: 15.01.1992
(73) Patentinhaber: HÜLS AKTIENGESELLSCHAFT, 45764 Marl (DE)
(72) Erfinder: Seiler, Claus-Dietrich, Dr., W-7888 Rheinfelden (DE); Rauleder, Hartwig, Dr., W-7888 Rheinfelden (DE); Kötzsch, Hans-Joachim, Dr., W-7888 Rheinfelden (DE); Schork, Reinhold, Dr., W-7888 Rheinfelden (DE)

(56) Entgegenhaltungen:
- US-A- 2 986 875
- US-A- 4 623 693
- CHEMICAL ABSTRACTS, Band 52, 1958, Zusammenfassung Nr. 3673i, Columbus, Ohio,US; B.N. DOLGOV et al.: "Alkoxysilanes. VII. Reaction of tetraacetoxysilanewith alcohols. Synthesis of tetraalkoxy- and alkoxyacetoxysilanes",& ZHUR. OBSHCHEI KHIM. 27, 921-6(1957) (Kat. D)

## Beschreibung

Gegenstand der vorliegenden Erfindung ist ein Verfahren zur Herstellung von Ditertiärbutoxydiacetoxysilan aus Tetraacetoxysilan und Tertiärbutanol.

Diese Siliciumverbindung eignet sich insbesondere als Vernetzungsmittel bei der Herstellung von unter Ausschluß von Wasser lagerfähigen und bei Zutritt von Feuchtigkeit bei Raumtemperatur zu Elastomeren härtbaren Massen. Solche Massen werden durch Vermischen von kondensationsfähige Endgruppen enthaltenden Diorganopolysiloxanen und vernetzenden Siliciumverbindungen erhalten.

Es ist bekannt, Ditertiärbutoxydiacetoxysilan durch Umsetzung von Ditertiärbutoxydichlorsilan mit Essigsäure in Gegenwart von geeigneten Säureakzeptoren und Lösungsmitteln herzustellen (US-PS 2 566 957). Nachteilig bei diesem Verfahren ist, daß in Abhängigkeit vom eingesetzten Säureakzeptor Aminhydrochloride in sehr feinteiliger, schwer filtrierbarer und schwer auswaschbarer Form anfallen. Die mit der angewandten Verfahrensweise erzielbaren Ausbeuten liegen bei 76 % und erfordern den Einsatz des nur durch einen aufwendigen Prozeß zugänglichen Ausgangsproduktes Ditertiärbutoxydichlorsilan.

Weiterhin ist bekannt, Alkoxyacetoxysilane durch Umsetzung von Alkoholen mit Tetraacetoxysilan herzustellen (Zhurnal obscej Chimii 27 (1957) S. 921 bis 926). In dieser Literaturstelle wird angegeben, daß tertiäre Alkohole mit Tetraacetoxysilan nur schwer zur Reaktion zu bringen sind. Bei Verwendung von Tertiärbutanol als alkoholische Komponente müssen die Reaktionsmischungen auf Temperaturen von 100 bis 140 °C erwärmt werden, um Tertiärbutoxyacetoxysilane zu erhalten. So mußte für die Herstellung von Ditertiärbutoxydiacetoxysilan ein Gemisch aus Tetraacetoxysilan und Tertiärbutanol im Molverhältnis 1 : 2 in 4 Stunden bis auf 100 °C aufgeheizt werden. Die aus dem Reaktionsgemisch nach destillativer Aufarbeitung erhaltene Produktausbeute betrug auch dann nur 48 %.

Es bestand deshalb die Aufgabe, Ditertiärbutoxydiacetoxysilan so herzustellen, daß keine nur unter großem technischem Aufwand zu fertigenden Ausgangsprodukte verwendet werden und die eingesetzten Ausgangsprodukte möglichst quantitativ in das Zielprodukt überführt werden.

In Erfüllung dieser Aufgabe wurde ein Verfahren zur Herstellung von Ditertiärbutoxydiacetoxysilan durch Umsetzung von Tetraacetoxysilan und Tertiärbutanol gefunden, das dadurch gekennzeichnet ist, daß man die Umsetzung bei Temperaturen bis zu 80 °C durchführt und anschließend das entstandene Ditertiärbutoxydiacetoxysilan isoliert.

Eine bevorzugte Ausführungsform des Verfahrens besteht darin, daß man die Umsetzung der Komponenten Tetraacetoxysilan und Tertiärbutanol in Gegenwart des Reaktionsgemisches durchführt, wie es bei der Herstellung von Tetraacetoxysilan aus Siliciumtetrachlorid und Essigsäure anfällt.

Für den Ablauf der Reaktion ist es unwesentlich, in welcher Reihenfolge die Reaktanten aufeinander einwirken. Die bevorzugte Form des Reaktionsablaufes besteht darin, auf den vorgelegten Feststoff Tetraacetoxysilan das in flüssiger Form vorliegende Tertiärbutanol einwirken zu lassen. Das Ende der Umsetzung erkennt man daran, daß das anfangs heterogene System homogen wird. Dieser Zustand stellt sich ca. 30 Minuten nach Beendigung der Zusammenführung der Reaktionspartner ein. Im Gegensatz zu dem in der vorab erwähnten Veröffentlichung (Zhurnal obscej Chimii) beschriebenen Verfahren läuft erfindungsgemäß die an sich bekannte Reaktion in dem beanspruchten Temperaturbereich innerhalb kurzer Zeit ab. Ein Nachheizen nach Erreichen der homogenen Reaktionslösung ist nicht notwendig.

Die Umsetzung von Tetraacetoxysilan mit Tertiärbutanol kann auch in Gegenwart inerter Medien erfolgen. Derartige Stoffe, wie aliphatische Kohlenwasserstoffe, Aromaten oder Chlorkohlenwasserstoffe, üben keinen speziellen Einfluß auf das Reaktionsgeschehen aus.

Die Anwendung von aliphatischen Kohlenwasserstoffen als Lösungsmittel empfiehlt sich besonders dann, wenn das Ausgangsprodukt Tetraacetoxysilan das nicht aufgearbeitete Umsetzungsprodukt der Reaktion von SiCl₄ und Essigsäure ist.

Da die Reaktion von keiner Wärmetönung begleitet wird, ist das Zusammenführen der Reaktionskomponenten Tetraacetoxysilan und Tertiärbutanol auch in größeren Mengen problemlos möglich.

Die Reaktion kann man sowohl kontinuierlich als auch diskontinuierlich durchführen; bevorzugt erfolgt die Umsetzung diskontinuierlich. Bei einer kontinuierlichen Arbeitsweise werden alkoholische Komponente und Tetraacetoxysilan, gegebenenfalls suspendiert in einem inerten Medium, unter Berücksichtigung der stöchiometrischen Gegebenheiten in einen geeigneten Reaktor, z. B. einen Röhrenreaktor, gleichzeitig eingespeist. Nach entsprechender Verweilzeit verlassen das Umsetzungsprodukt Ditertiärbutoxydiacetoxysilan, Reste an nicht umgesetzten Ausgangssubstanzen, ggf. geringe Mengen an Nebenprodukten sowie die ebenfalls gebildete Essigsäure den Reaktor.

Die Umsetzung der Reaktionskomponenten Tetraacetoxysilan und Tertiärbutanol wird erfindungsgemäß bei Temperaturen bis 80 °C durchgeführt. Bei Anwendung dieser Reaktionstemperaturen werden verbesserte Ausbeuten an Ditertiärbutoxydiacetoxysilan erhalten, die bis zu 100 % über den Ausbeuten der bisher bekannten Herstellmethoden liegen.

Bei Umsetzung der Reaktionskomponenten Tetraacetoxysilan und Tertiärbutanol bei den beanspruchten Temperaturen bis 80 °C differieren die erhaltenen Ausbeuten an Ditertiärbutoxydiacetoxysilan nur unwesentlich, wobei mit ansteigender Reaktionstemperatur eine geringe Tendenz zur Ausbeuteverminderung erkennbar ist. Deshalb wird die Reaktion bevorzugt im Temperaturbereich von 40 bis 70 °C durchgeführt. Bei Anwendung von Reaktionstemperaturen oberhalb 80 °C treten die obengenannten Ausbeuteminderungen an Ditertiärbutoxydiacetoxysilan ein. Die untere Grenze des Temperaturbereichs ist durch den Schmelzpunkt des Tertiärbutanols bestimmt, der durch Zusatz geeigneter Lösungsmittel auf Temperaturen bis ca. 0 °C herabgesetzt werden kann. Wichtig ist also, daß während der Reaktion das Tertiärbutanol als flüssige Phase vorliegt.

Die Reaktionskomponenten Tetraacetoxysilan und Tertiärbutanol werden bevorzugt im Molverhältnis 1 : 1,9 bis 2,2 eingesetzt.

Es hat sich als zweckmäßig erwiesen, die Reaktionskomponenten im Molverhältnis 1 : 2 umzusetzen. Bei dieser Wahl der Molverhältnisse werden im beanspruchten Temperaturbereich Reaktionsprodukte erhalten, die im wesentlichen frei von den Nebenprodukten Tertiärbutoxytriacetoxysilan und Tritertiärbutoxyacetoxysilan sind.

Die Reaktion wird bei Normaldruck durchgeführt. Die Anwendung von Unter- und auch von Überdruck ist möglich; sie beeinflussen das Reaktionsgeschehen jedoch nicht wesentlich. Die Aufarbeitung der durch Anwendung des erfindungsgemäßen Verfahrens erhaltenen Rohprodukte erfolgt in an sich bekannter Weise. Vorzugsweise werden dabei das gegebenenfalls anwesende Lösungsmittel und die bei der Reaktion entstandene Essigsäure abdestilliert. Unabhängig von der Zusammensetzung des Rohproduktes wird die Aufarbeitung von Anbeginn unter Vakuum durchgeführt. Während des gesamten Aufarbeitungsprozesses werden Vorkehrungen getroffen, daß die das Reaktionsprodukt Ditertiärbutoxydiacetoxysilan enthaltende Phase nicht längerzeitig über 90 °C erwärmt wird.

Nach destillativer Entfernung aller leichtsiedenden Substanzen aus dem Reaktionsgemisch wird Ditertiärbutoxydiacetoxysilan in einer Qualität erhalten, die für viele Einsatzzwecke ausreichend ist. Die Anwendung in anspruchsvollen Einsatzgebieten erfordert eine besondere Produktqualität, die durch eine Enddestillation über einen Dünnschichtverdampfer im Vakuum bei Temperaturen von weniger als 90 °C erhalten wird.

Die Erfindung wird anhand der nachstehend aufgeführten Beispiele erläutert:

### Beispiel 1

In einen 4-Liter-Doppelmantelkolben, der mit einem Rückflußkühler, einem Rührer, einem Tropftrichter und einem Thermometer ausgestattet ist und mittels eines thermostatisierten Wärmekreislaufes beheizt wird, werden 1 056 g (4 mol) Tetraacetoxysilan vorgelegt. Aus dem Tropftrichter werden 480 g (8 mol) Tertiärbutanol innerhalb von 3 Minuten in das vorgelegte Tetraacetoxysilan, das über den thermostatisierten Wärmekreislauf auf einer Temperatur von 23 °C gehalten wird, zugegeben. Innerhalb von 30 Minuten ist die Reaktion beendet, was am vollständigen Verschwinden des Tetraacetoxysilans erkennbar ist. Eine gaschromatographisch-analytische Untersuchung (GC) des Kolbenproduktes zeigt das Vorliegen des Zielproduktes Ditertiärbutoxydiacetoxysilan neben Essigsäure an. Das Rohprodukt wird in eine Destillationsapparatur überführt, die aus einer Doppelmantel-Destillationsblase mit angeschlossenem thermostatisierten Wärmekreislauf und eingesetztem Thermometer sowie einem Destillationsaufsatz, der an eine Vakuumpumpe mit vorgeschalteter Kühlfalle angeschlossen ist, besteht. Bei einer Sumpftemperatur bis zu maximal 85 °C wird das eingesetzte Rohprodukt innerhalb 2 Stunden von der gesamten Essigsäure befreit. Es bleibt eine klare, nahezu farblose Flüssigkeit (1 153 g) zurück, die einen Reinheitsgrad (GC) von 97 % hat. Die destillative Aufarbeitung des Blasenproduktes in einem gläsernen Labor-Dünnschichtverdampfer unter Vakuum ergibt einen Destillatanteil von 1 131 g mit einem Reinheitsgrad (GC) von 98 % und einen Rückstand von 22 g.

### Beispiel 2

Der Versuch von Beispiel 1 wird wiederholt, jedoch werden 80 °C als Reaktionstemperatur angewendet.

Eine GC-analytische Untersuchung des Reaktionsrohproduktes zeigt das Vorliegen des Zielproduktes neben Essigsäure, äußerst geringen Mengen der Verbindungen Tertiärbutoxytriacetoxysilan, Tritertiärbutoxyacetoxysilan und Siloxanen an.

Nach destillativer Entfernung der Essigsäure verbleibt ein schwach gelblicher Blasenrückstand (1 152 g) mit einem Reinheitsgrad (GC) von 93,2 %. Die Aufarbeitung dieses Blasenrückstandes im Dünnschichtverdampfer erbringt einen Destillatanteil von 1 109 g mit einem Reinheitsgrad von 96,8 % und einen Rückstandsanteil von 40 g.

### Beispiel 3 (Vergleichsbeispiel)

Der Versuch von Beispiel 1 wird wiederholt, jedoch werden 115 °C als Reaktionstemperatur angewandt.

Eine GC-analytische Untersuchung des Reaktionsrohproduktes zeigt das Vorliegen des Zielproduktes neben Essigsäure an. Zusätzlich wird eine verstärkte Präsenz von Siloxanen festgestellt. Nach destillativer Entfernung der Leichtsieder verbleibt ein gelber Rückstand (1 096 g) in der Destillationsblase mit einem Gehalt von 43,7 % an Ditertiärbutoxydiacetoxysilan. Die destillative Aufarbeitung erbringt eine Destillatmenge von 465 g bei einem Rückstandsanteil von 598 g.

### Beispiel 4

Der Versuch von Beispiel 2 wird wiederholt, jedoch mit der Abänderung, daß der vorgelegten Tetraacetoxysilanmenge 2 000 ml Octan zugesetzt werden. Nach destillativer Entfernung des Octans und der Essigsäure verbleibt in der Destillationsblase ein schwach gelblicher Rückstand (1 160 g) mit einem Reinheitsgrad von 93,9 %. Die Aufarbeitung im Dünnschichtverdampfer ergibt einen Destillatanteil von 1 119 g mit einem Reinheitsgrad von 97,3 % und eine Rückstandsmenge von 38 g.

### Beispiel 5 (Vergleichsbeispiel)

Der Versuch von Beispiel 3 wird wiederholt, jedoch mit der Abänderung, daß der vorgelegten Tetraacetoxysilanmenge 2 000 ml Octan zugefügt werden.

Nach destillativer Entfernung des Octans, der Essigsäure und von Leichtsiedern bleibt ein gelbes Produkt (1 096 g) mit einem Gehalt an Ditertiärbutoxydiacetoxysilan (GC) von 59,7 % in der Destillationsblase zurück.

Die destillative Aufarbeitung dieses Blasenrückstandes erbringt eine Destillatmenge von 658 g und einen Rückstandsanteil von 434 g.

### Beispiel 6

In einen 3-m³-Reaktionskessel, der mit einem Kühlaufsatz ausgestattet und über diesen an eine Wasserstrahlsaugeinrichtung angeschlossen ist, werden 500 kg Siliciumtetrachlorid zusammen mit 400 Litern Hexan vorgelegt. Bei einer Temperatur des Reaktionsmediums von 70 °C werden in 5 Stunden 740 kg Essigsäure zudosiert. Der sich laufend bildende Chlorwasserstoff wird abgesaugt. Nach seiner vollständigen Entfernung wird dem Tetraacetoxysilan/Hexan-System eine Menge von 436 kg Tertiärbutanol innerhalb von 20 Minuten zugeführt. 30 Minuten später wird der Kesselinhalt in eine Destillationsanlage überführt und unter Vakuum die Abtrennung der Leichtsieder (Hexan, Essigsäure und andere) vorgenommen. Der hellgelbe Blasenrückstand (856 kg, Reinheitsgrad (GC) 93,6 %) wird nach Filtration entweder als Verkaufsprodukt abgefüllt oder unmittelbar anschließend in einem Dünnschichtverdampfer aufgearbeitet. Hierbei wird eine Destillatmenge von 825 kg mit einem Reinheitsgrad (GC) von 97 % erhalten.

### Beispiel 7

In einen Reaktionskolben, der mit einem Destillationsaufsatz ausgerüstet ist, werden 1 050 g Essigsäureanhydrid vorgelegt. Bei 25 °C werden 350 g Siliciumtetrachlorid in ca. 5 Minuten zudosiert. Das ausgefallene Tetraacetoxysilan wird destillativ von entstandenem Acetylchlorid und überschüssigem Essigsäureanhydrid befreit. Zu der trockenen Tetraacetoxysilanmasse werden bei Raumtemperatur 350 g Tertiärbutanol zugegeben. Das entstehende Ditertiärbutoxydiacetoxysilan/Essigsäure-Gemisch wird unter Vakuum destillativ von der Essigsäure befreit und mittels Destillation im Dünnschichtverdampfer nachgereinigt. Man erhält so 578 g farbloses Ditertiärbutoxydiacetoxysilan mit einem Reinheitsgrad (GC) von 98 %.

## Patentansprüche

1. Verfahren zur Herstellung von Ditertiärbutoxydiacetoxysilan durch Umsetzung von Tetraacetoxysilan und Tertiärbutanol, dadurch gekennzeichnet, daß man die Umsetzung bei Temperaturen bis zu 80 °C durchführt und anschließend das entstandene Ditertiärbutoxydiacetoxysilan isoliert.

2. Verfahren nach Anspruch 1, dadurch gekennzeichnet, daß man ein Tetraacetoxysilan einsetzt, das als unmittelbares Umsetzungsprodukt der Reaktion zwischen SiCl₄ und Essigsäure anfällt.

3. Verfahren nach Anspruch 1 oder 2, dadurch gekennzeichnet, daß man die Umsetzung im Temperaturbereich von 40 bis 70 °C durchführt.

4. Verfahren nach einem der Ansprüche 1 bis 3, dadurch gekennzeichnet, daß die Umsetzung in einem aliphatischen Kohlenwasserstoff durchgeführt wird.

## Claims

1. Method for the preparation of ditertiarybutoxydiacetoxysilane by reaction of tetraacetoxysilane and tertiary butanol, **characterised in that** the reaction is carried out at temperatures up to 80°C and then the ditertiary-butoxydiacetoxysilane being produced is isolated.

2. Method according to claim 1, **characterised in that** there is employed a tetraacetoxysilane which is formed as direct reaction product of the reaction between SiCl₄ and acetic acid.

3. Method according to claim 1 or 2, **characterised in that** the reaction is carried out in the temperature range of 40 to 70°C.

4. Method according to claims 1 to 3, **characterised in that** the reaction is carried out in an aliphatic hydrocarbon.

## Revendications

1. Procédé de préparation de di-tertio-butoxy-diacétoxy silane par la réaction du tétraacétoxy silane et du tertio-butanol, procédé caractérisé en ce qu'on effectue la réaction à des températures allant jusqu'à 80°C et l'on isole ensuite le di-tertiobutoxy-diacétoxy silane résultant.

2. Procédé selon la revendication 1, caractérisé en ce qu'on utilise un tétracétoxy silane que l'on obtient comme produit direct de la réaction entre SiCl₄ et l'acide acétique.

3. Procédé selon la revendication 1 ou 2, caractérisé en ce qu'on effectue la réaction dans un intervalle de la température allant de 40 à 70°C.

4. Procédé selon l'une des revendications 1 à 3, caractérisé en ce qu'on effectue la réaction dans un hydrocarbure aliphatique.
